# EUROPEAN PATENT SPECIFICATION

(11) **EP 3 378 119 B1**
(45) Date of publication and mention of the grant of the patent: **13.11.2019**
(21) Application number: 16801542.8
(22) Date of filing: 17.11.2016
(51) Int. Cl.: H01M 8/16

(54) **MICROBIAL FUEL CELL ARRANGEMENT AND USES THEREOF**
MIKROBIELLE BRENNSTOFFZELLENANORDNUNG UND DEREN VERWENDUNGEN
AGENCEMENT DE PILES À COMBUSTIBLE MICROBIENNES ET SES UTILISATIONS

(30) Priority: 20.11.2015 US 201562257801 P; 16.12.2015 FI 20155955
(43) Date of publication of application: 26.09.2018
(73) Proprietor: Kemira Oyj, 00180 Helsinki (FI)
(72) Inventor: PELAEZ, Miguel, Atlanta, Georgia GA 30308 (US); BAVA, Luciana, Dunwoody, Georgia GA 30338 (US); CASASÚS, Anna, Norcross, Georgia GA 30071 (US)
(74) Representative: Berggren Oy, Turku
(86) International application number: PCT/FI2016/050811
(87) International publication number: WO 2017/085361

(56) References cited:
- CN-A- 102 531 181
- CN-A- 102 751 524
- CN-A- 103 825 041
- KR-A- 20090 091 878

## Description

The present invention relates to a microbial fuel cell arrangement and its use according to the preambles of the enclosed independent claims.

A microbial fuel cell (MFC) provides an alternative for water treatment and energy generation. It offers a possibility to convert chemical energy into electrical energy by using microorganisms. A typical microbial fuel cell comprises a cell reactor with an anode and a cathode, which are connected to each other through an external electrical circuit. On the anode side of the cell reactor organic substances in an aqueous liquid medium are oxidized by microorganisms. The oxidation generates carbon dioxide, electrons and protons. Some microorganisms, which are called exoelectrogens, release some of the electrons produced from cell respiration to the anode. The electrons are transferred via the external circuit to the cathode, and the protons are transferred to the cathode through the liquid medium. Electrons and protons are then consumed in chemical reaction(s) at the cathode. For example, in wastewater treatment, electrons and protons are consumed at the cathode, combining with oxygen, e.g. from air, and forming water according to the reaction:

O₂ + 4H⁺ + 4e⁻ → 2H₂O

Many of the present microbial fuel cell constructions are intended to be used in laboratories and are not readily adapted for use in practical applications due to their complicated mechanical construction. Furthermore, the membranes used in laboratory microbial fuel cells may cause problems in ion transfer between the anode and cathode, especially if the liquid medium comprises a complex matrix of organic and inorganic substances.

There is a desire for microbial fuel cells to be used also in larger scale for treating wastewater or natural water reservoirs. In order to fulfill this desire it is necessary that the microbial fuel cells would have a low cost of construction, be easy to maintain, and be applicable on-site or in remote treatment units in natural environments.

CN102531181 discloses a combined ecological floating bed device for using a microbial fuel cell to purify lake water.

KR20090091878 discloses a microbial fuel cell based on adaptive electrode for changing water level. The surface area per unit area is maximized through a bar type negative and positive electrodes to increase current productivity, and to control the number of bar type negative and positive electrodes.

CN103825041 discloses a single-chamber and film-free anaerobic type microbial fuel cell for processing acidic mine wastewater.

CN102751524 discloses a microbial fuel cell without membrane, where the cell includes a cylindrical reactor, a cathode and an anode.

The object of the present invention is to minimize or even eliminate the disadvantages existing in the prior art.

One object is to provide a microbial fuel cell unit that has simple and robust structure, having no volume limitations.

Another object of the present invention is to provide a microbial fuel cell arrangement which is easy to scale according to the need.

These objects are achieved by the features disclosed in the independent claims and the invention is defined by the features of the enclosed independent claims. Some preferred embodiments of the present invention are presented in the dependent claims.The features recited in the dependent claims are mutually freely combinable unless otherwise explicitly stated.

The exemplary embodiments presented in this text and their advantages relate by applicable parts to the MFC unit as well as the use according to the invention, even though this is not always separately mentioned.

A typical microbial fuel cell unit comprises
- at least one cathode,
- at least one anode, which is arranged at a distance from the cathode, preferably in direction of gravity, the anode being in free contact with a surrounding medium, provided that the number of cathode(s) or anode(s) is more than one, the anode(s) and cathode(s) being connected with each other through an external electrical circuit,
- locating means for positioning the unit within the surrounding medium,
wherein the fuel cell unit is free from any membranes located between the cathode(s) and the anode(s).

Typical arrangement of the present invention comprises at least two microbial fuel cell units as defined in claim 1.

Now it has been surprisingly found that the microbial fuel cell unit provides a robust construction which is easy and inexpensive to manufacture and maintain. The anode of the MFC unit is in free contact with the surrounding medium and the MFC unit is free of any membranes. This means that the MFC unit is reactorless and membraneless, which enables effective anode contact with the surrounding medium. As the individual units are easily attached together to form an arrangement, the arrangement is easy to scale up as desired. Additionally, the present invention minimizes the materials needed for the construction of a microbial fuel cell unit, thus resulting in lower cost and effective use of resources.

In the present context the term "surrounding medium" is understood as aqueous medium comprising organic substances. The aqueous medium is here understood as medium comprising free water, such as an aqueous liquid, an aqueous solution or an aqueous suspension, or in some embodiments as moist medium comprising bound water, such as moist or wet soil. Preferably the aqueous medium is an aqueous liquid, an aqueous solution or an aqueous suspension. The medium may comprise solid inorganic and/or organic substances and/or particles. The surrounding medium may be water, wastewater, sewage, mud, slurry, sediment, or any aqueous suspension of inorganic and/or organic particles. The aqueous medium may comprise less than 80 weight-%, preferably less than 60 weight-%, more preferably less than 50 weight-%, of solids. According to one embodiment of the invention the surrounding medium is water or aqueous suspension comprising less than 30 weight-%, of solids. According to one embodiment the aqueous medium may comprise 0.1 - 80 weight-%, preferably 0.5 - 60 weight-%, more preferably 0.5 - 50 weight-%, even more preferably 1 - 30 weight-%, of solids.

The MFC unit comprises at least one cathode. The cathode(s) may be made of conductive material, such as carbon, graphite, catalyst coated carbon, catalyst coated graphite or other corresponding conductive material. The cathode(s) may be in form of a cloth, fibers, granules or a fiber felt. Examples of suitable cathode materials are carbon cloth, carbon felt, carbon fiber, carbon paper and graphite fiber. According to one embodiment of the invention the at least one cathode is flat and sheet-like, having a first horizontal large surface which can be arranged in contact with a catholyte, preferably air. The second horizontal large surface of the cathode may be at least partly arranged in contact with the surrounding medium, which is preferably a liquid medium. According to one embodiment the specific area of a cathode, i.e. the ratio of the cathode surface area to volume, may be 0.3 - 1000 m²/m³, preferably 0.5 - 500 m²/m³, more preferably 0.5 - 250 m²/m³.

The MFC unit comprises further at least one anode, which is arranged at a distance from the cathode in direction of gravity. When the anode and cathode are arranged on top of each other in vertical direction, the space needed for the individual MFC unit is reduced.

The at least one anode is arranged in free contact with a surrounding medium, which means that the MFC unit is free of walls, frames or casings that would surround the anode and delimit the volume of the MFC unit. The surrounding medium is able to freely flow around the anode and to come into contact with it. This means that an individual MFC unit according to the invention does not have any volume limitation.

The at least one anode may be a carbon or graphite electrode, or a catalyst coated carbon electrode, such as Pt-coated carbon electrode. Preferably the anode has as high surface area as possible in order to provide effective support for the exoelectrogenic microorganisms. The specific surface area of the anode may be in the range of 10 - 25 000 m²/m³, preferably 100 - 20 000 m²/m³.

According to one embodiment of the invention the individual at least one anode is brushlike or has a honeycomb structure in order to maximize the surface area of anode. The brush-like anode comprises a shaft, e.g. of titanium, and fibers of graphite or carbon. The fibers are attached to the shaft and extend radially from the shaft. The shaft extends vertically into the surrounding medium. The specific surface area for a brushlike anode may be in the range of 1000 - 25 000 m²/m³, preferably 3000 - 20000 m²/m³.

The at least one anode may alternatively be in form of a hollow perforated body, such as hollow perforated sphere, hollow perforated cube or hollow perforated cylinder. The perforations of the wall of the body allow the effective transfer of the surrounding medium in and out of the body. The hollow perforated body may be filled with carbon or graphite granules or particles, in which case the hollow body may be considered as a packed granular bed. The specific surface area for an anode formed of graphite granules or particles may be in the range of 100 - 5 000 m²/m³, preferably 500 - 3000 m²/m³.

Further, the at least one anode may be a flat sheet-like anode. In case the cathode(s) are also flat and sheet-like, the anode(s) can be arranged parallel with the cathode(s) at a distance from it(them). The anode(s) and the cathode(s) can be arranged in contact with a permeable separator, which is arranged between them. The separator is of non-membrane material. Alternatively, the anode(s) can be arranged at angles, surrounding a central cathode. The surface area of anode(s) and cathode(s) may be different from each other.

According to one embodiment of the invention the number of cathode(s) and anode(s) in the MFC unit may be different from each other. For example, the number of cathodes in one MFC unit may be in the range of 1 - 15, preferably 1 - 5, more preferably 1 - 3. The number of anodes in one MFC unit may be in the range of 1 - 15, preferably 2 - 10, more preferably 4 - 7. According to one preferable embodiment of the invention the number of anodes in the MFC unit is higher than the number of cathodes. Preferably, the MFC unit comprises one cathode and a plurality of anodes, such as 1 to 7, or 2 to 7.

The MFC unit is free from any water-permeable membranes located between the cathode(s) and the anode(s). This means that the unit comprises no permeable or semipermeable membranes between the cathode(s) and anode(s) that could limit the ion transfer from the anode(s) to the cathode(s). This improves the efficiency of the production of electrical energy. The MFC unit is also more robust and easier to maintain, as it does not suffer from membrane fouling or other problems associated with membranes.

According to the invention each MFC unit is physically connected, detachably, with at least one other unit in order to form an arrangement comprising at least two MFC units, preferably a plurality of MFC units. For example, a plurality of MFC units may be detachably attached to a net structure, or the MFC units may be removably connected with each other by connectors, such as fittings, ropes, chains, strings, sticks, tubes. In this manner it is possible to adapt the arrangement easily by increasing or decreasing the number of MFC units according to the desired electrical effect or water treatment capacity. This makes the arrangement according to the present invention extremely adaptable and flexible.

The MFC unit comprises also locating means for positioning the unit within the surrounding medium. The MFC unit is positioned in the surrounding medium so that the cathode comes in contact with a catholyte. According to a preferable embodiment of the invention the locating means are arranged to position the cathode in contact with the surface of the surrounding medium, so that the cathode comes into contact with air. For example, when the cathode is flat and sheet-like it can be arranged, e.g. floating, on the surface of the surrounding medium, whereby the first horizontal large surface of the cathode is arranged in contact with air. The locating means may comprise at least one floating support, such as buoy or any buoyant material. When a plurality of individual MFC units are attached together to form an arrangement, the arrangement may comprise a plurality of locating means, whereby the MFC units form a floating array.

When the MFC unit or units are arranged to float on the surface of the surrounding medium, the first side or surface of the cathode is arranged in contact with air. The anode is preferably arranged submerged in the surrounding medium and has no direct immediate contact with the surface of the medium or with the air.

Alternatively, the locating means are arranged to position the cathode of the MFC unit submerged beneath the surface of the surrounding medium. In this case it is possible to arrange means for providing catholyte, e.g. by bubbling oxygen gas to the surrounding medium, near the cathode.

The locating means may also comprise attaching means and fixed supports, such as poles. The locating means may comprise attaching means, such as netting, chains or ropes, which are connected to a fixed support, such as pole or tank wall. The attaching means form the connection between the MFC unit and the fixed support. The locating means may also comprise means for adjusting the surrounding medium level in order to position the MFC unit at the desired position in the surrounding medium.

The anode(s) and cathode(s) are connected with each other through an external electrical circuit. The external circuit may comprise suitable electrical components, such as resistor(s), capacitor(s), current regulator(s), voltage regulator(s), AC/DC converter(s), switch(es).

The at least one anode of the MFC unit is arranged in connection with an anode current collector. When the MFC unit comprises a plurality of anodes, they may be arranged in connection with one common anode current collector, or each individual anode may be arranged in connection with its own anode current collector.

According to one preferable embodiment the MFC unit comprises at least two anodes, which are arranged in contact with a common anode current collector.

The at least one cathode of the MFC unit is arranged in connection with a cathode current collector. When the MFC unit comprises a plurality of cathodes, they may be arranged in connection with one common cathode current collector, or each individual cathode may be arranged in connection with its own cathode current collector.

The anode current collectors, as well as cathode current collectors may be made of metal mesh, such as stainless steel mesh.

According to one embodiment of the invention, the arrangement comprises a plurality of MFC units wherein each unit comprises an anode current collector and a cathode current collector, and the anode current collectors and the cathode current collectors are in electrical connection with each other.

According to another embodiment of the invention, the arrangement comprises a plurality of individual MFC units wherein each individual unit comprises either an anode current collector or a cathode current collector, and either all the cathodes of the individual units are connected to a common cathode current collector or all the anodes of the individual units are connected to a common anode current collector.

The cathode current collectors/anode current collectors of the MFC units in the arrangement can be electrically connected in series or parallel.

According to one embodiment of the invention, the cathodes of the MFC units are connected to a common cathode current collector and the anodes of the MFC units are connected to a common anode current collector.

According to one embodiment, the MFC unit comprises a layered sandwich structure including a cathode, a cathode current collector, an anode and an anode current collector. A separator may be arranged between the cathode current collector and anode current collector in order to prevent short circuit. The separator may be made of any suitable insulating material, such as insulating cloth. For example, the separator may comprise a non-metal frame, e.g. polymethylmethacrylate frame, and an insulating cloth fixed to the frame.

The MFC unit and arrangement according to the present invention are suitable for use in any body of water, including natural waters, such as rivers, lakes, ponds, seas, as well as wastewater. By employing them it is possible to reduce the organic substances in polluted natural waters, for example in developing countries. The MFC unit and arrangements are further suitable for use in waste water treatment, e.g. in pipelines and/or clarifier ponds.

According to one embodiment of the invention the surrounding medium is wastewater, which is selected from domestic wastewater; municipal or agricultural wastewater; effluent from an industrial process selected from pulp and paper, oil and gas, mining, food or beverage, pharmaceutical manufacturing, textile manufacturing, chemical manufacturing, power production, goods or electronics manufacturing, medical waste. The microbial fuel cell unit according to the invention is suitable for treating any surrounding medium comprising necessary level of organic substances and devoid of compounds or substances which are toxic for exoelectrogenic microorganisms.

In the following, the invention will be described in more detail with reference to the appended schematic drawings, in which
Figure 1 shows schematically one embodiment of the MFC unit,
Figure 2 shows schematically another embodiment of the MFC unit,
Figure 3 shows schematically yet another embodiment of the MFC unit, and
Figure 4 shows schematically an embodiment of the arrangement according to the present invention.

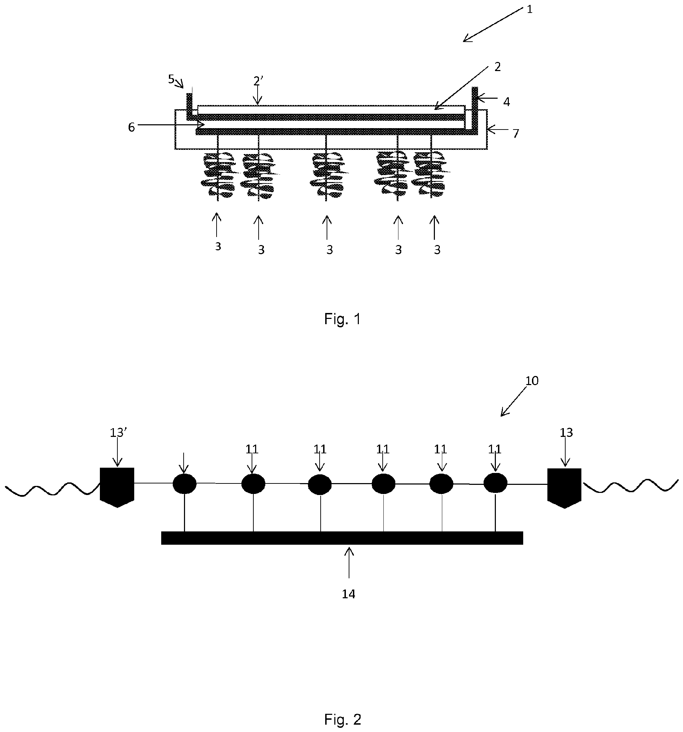

In Figure 1 is shown schematically one embodiment. The microbial fuel cell unit 1 comprises a cathode 2, which is an air cathode. The surface of the first side 2' of the cathode 2 is in contact with air. The cathode 2 is arranged in connection with a cathode current collector 5.

The MFC unit 1 comprises also a plurality of anodes 3, which are arranged in the direction of gravity at a distance from the cathode 2. All the anodes 3 of the MFC unit 1 are arranged in connection with an anode current collector 4. Between the anode current collector and the cathode current collector is arranged a separator 6, which prevents short circuit.

The MFC unit 1 comprises also a locating means 7, in this case a floating support, e.g. of Styrofoam™. The locating means 7 is arranged to position the first side 2' of the cathode 2 in contact with air. In practice, this means that the MFC unit floats on the surface of the liquid medium while producing electricity and reducing the amount of organic substances in the liquid medium.

In Figure 2 is shown schematically another embodiment of the MFC unit. The MFC unit 10 comprises a number of cathodes 11. The locating means comprises a net and buoys 13, 13' arranged on the outer periphery of the net. The cathodes 11 are connected to the net, which prevents the movement of the cathodes 11 in relation to each other. The net and the buoys 13 position the cathodes 11 on the surface of the liquid medium.

The MFC unit 10 comprises also one anode 14, which is made of carbon fiber material with a high surface area. The anode 14 is also connected to the net or to the frames of the cathodes. In this manner the position and distance of the anode 14 from the cathodes 11 is maintained constant.

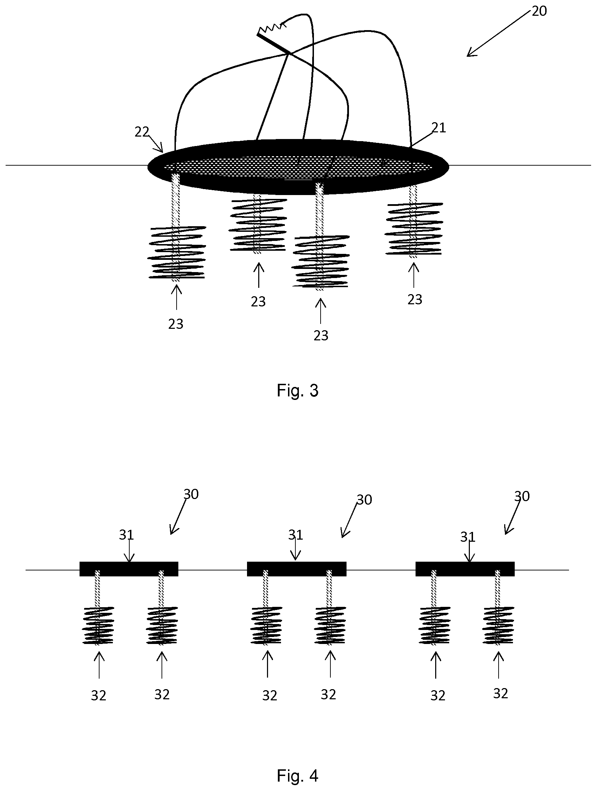

In Figure 3 is shown schematically yet another embodiment of the MFC unit. The MFC unit 20 comprises a cathode 21, which is made of carbon fiber felt. The carbon fiber felt is fixed on a ring support 22, which functions simultaneously as a locating means. The MFC unit comprises further a plurality of anodes 23 which are a connected to the ring support 22. The cathode 21 and the anodes 23 are physically connected with electrical wires to an external electrical circuit (not shown). The ring support 22, which can be made of floating and insulating polymer material, positions the MFC unit 20 on the surface of the liquid medium and guarantees that the first side of the cathode 21 is in contact with air.

In Figure 4 is shown schematically an embodiment of the arrangement according to the present invention. The arrangement comprises a plurality of individual MFC units 30. Each MFC unit 30 comprises one cathode 31 and a plurality of anodes 32. The MFC units 30 are connected together in such a manner that each MFC unit is connected to at least one other MFC unit. The MFC units may be connected by using nets, ropes, chains or other suitable means.

## Claims

1. Microbial fuel cell arrangement comprising at least two microbial fuel cell (MFC) units, where each unit comprises
- at least one cathode,
- at least one anode, which is arranged at a distance from the cathode, preferably in direction of gravity, the anode being in free contact with a surrounding medium, provided that the number of cathodes or anodes is more than one, the anode(s) and cathode(s) being connected with each other through an external electrical circuit,
- locating means for positioning the unit within the surrounding medium,
wherein the fuel cell units are free from any membranes located between the cathode(s) and the anode(s) and where each unit is physically connected, detachably, with at least one other unit.

2. Arrangement according to claim 1, **characterized in that** in the microbial fuel cell unit the at least one cathode is flat and sheet-like, having a first horizontal large surface which can be arranged in contact with a catholyte, and a second horizontal large surface which is at least partly arranged in contact with the surrounding medium.

3. Arrangement according to claim 1 or 2, **characterized in that** the at least one anode is brushlike, has a honeycomb structure or is in form of a hollow perforated body.

4. Arrangement according to claim 1, 2 or 3, **characterized in that** the at least one anode may be a flat sheet-like anode, arranged parallel with the at least one cathode.

5. Arrangement according to any of preceding claims 1 to 4, **characterized in that** in the microbial fuel cell unit the number of anodes is higher than the number of cathodes, preferably the unit comprises one cathode and a plurality of anodes.

6. Arrangement according to any of preceding claims 1 to 5, **characterized in that** the unit comprises a plurality of anodes, which are arranged in connection with one common anode current collector, or each individual anode is arranged in connection with its own anode current collector.

7. Arrangement according to any of preceding claims 1 to 6, **characterized in that** the unit comprises at least two anodes, which are in contact with a common anode current collector.

8. Arrangement according to any of preceding claims 1 to 7, **characterized in that** the locating means comprises at least one floating support, such as a buoy.

9. Arrangement according to any of preceding claims 1 to 8, **characterized in that** the locating means comprises attaching means and fixed supports, such as poles.

10. Arrangement according to any of preceding claims 1 to 9, **characterized in that** the locating means is arranged to position the cathode in contact with the surface of the surrounding medium.

11. Arrangement according to claim 1, **characterized in that** each unit comprises an anode current collector and a cathode current collector, and the anode current collectors and the cathode current collectors are in electrical connection with each other.

12. Arrangement according to claim 1, **characterized in that** the cathodes of the units are connected to a common cathode current collector and the anodes of the units are connected to a common anode current collector.

13. Arrangement according to claim 1, **characterized in that** each unit comprises either an anode current collector or a cathode current collector, and either the cathodes of the units are connected to a common cathode current collector or the anodes of the units are connected to a common anode current collector.

14. Use of an arrangement according to any of claims 1 -13 for treating surrounding medium, which is a body of water including natural waters, such as rivers, lakes, ponds, and wastewater.

15. Use of an arrangement according to any of claims 1 -13 for treating surrounding medium, which is wastewater selected from domestic wastewater; municipal or agricultural wastewater; effluent from an industrial process selected from pulp and paper, oil and gas, mining, food or beverage, pharmaceutical manufacturing, textile manufacturing, chemical manufacturing, power production, goods or electronics manufacturing, medical waste.

## Patentansprüche

1. Mikrobielle Brennstoffzellenanordnung mit mindestens zwei mikrobiellen Brennstoffzellen (MFC)-Einheiten, wobei jede Einheit umfasst
- mindestens eine Kathode,
- mindestens eine Anode, die in einem Abstand von der Kathode, vorzugsweise in der Richtung der Schwerkraft, angeordnet ist, wobei die Anode in freiem Kontakt mit einem umgebenden Medium steht, wobei vorausgesetzt, dass die Anzahl der Kathoden oder Anoden größer als eins ist, die Anode(n) und die Kathode(n) über einen externen elektrischen Schaltkreis miteinander verbunden sind,
- Ortungsmittel zum Positionieren der Einheit innerhalb des umgebenden Mediums, wobei die Brennstoffzelleneinheiten frei von jeglichen Membranen sind, die sich zwischen der/den Kathode(n) und der/den Anode(n) befinden und wobei jede Einheit physisch, lösbar, mit mindestens einer anderen Einheit verbunden ist.

2. Anordnung nach Anspruch 1, **dadurch gekennzeichnet, dass** in der mikrobiellen Brennstoffzelleneinheit die mindestens eine Kathode flach und flächenartig ist, mit einer ersten horizontalen großen Oberfläche, die in Kontakt mit einem Katholyten angeordnet werden kann, und einer zweiten horizontalen großen Oberfläche, die zumindest teilweise in Kontakt mit dem umgebenden Medium angeordnet ist.

3. Anordnung nach Anspruch 1 oder 2, **dadurch gekennzeichnet, dass** die mindestens eine Anode bürstenartig ist, eine Wabenstruktur aufweist oder in Form eines hohlen perforierten Körpers vorliegt.

4. Anordnung nach Anspruch 1, 2 oder 3, **dadurch gekennzeichnet, dass** die mindestens eine Anode eine flache flächenartige Anode sein kann, die parallel zu der mindestens einen Kathode angeordnet ist.

5. Anordnung nach einem der vorhergehenden Ansprüche 1 bis 4, **dadurch gekennzeichnet, dass** in der mikrobiellen Brennstoffzelleneinheit die Anzahl der Anoden höher ist als die Anzahl der Kathoden, vorzugsweise die Einheit eine Kathode und eine Vielzahl von Anoden umfasst.

6. Anordnung nach einem der vorhergehenden Ansprüche 1 bis 5, **dadurch gekennzeichnet, dass** die Einheit eine Vielzahl von Anoden umfasst, die in Verbindung mit einem gemeinsamen Anodenstromabnehmer angeordnet sind, oder jede einzelne Anode in Verbindung mit einem eigenen Anodenstromabnehmer angeordnet ist.

7. Anordnung nach einem der vorhergehenden Ansprüche 1 bis 6, **dadurch gekennzeichnet, dass** die Einheit mindestens zwei Anoden umfasst, die mit einem gemeinsamen Anodenstromabnehmer in Kontakt stehen.

8. Anordnung nach einem der vorhergehenden Ansprüche 1 bis 7, **dadurch gekennzeichnet, dass** das Ortungsmittel mindestens einen schwimmenden Träger, wie beispielsweise eine Boje, umfasst.

9. Anordnung nach einem der vorhergehenden Ansprüche 1 bis 8, **dadurch gekennzeichnet, dass** das Ortungsmittel Befestigungsmittel und feste Halterungen, wie beispielsweise Stangen, umfasst.

10. Anordnung nach einem der vorhergehenden Ansprüche 1 bis 9, **dadurch gekennzeichnet, dass** das Ortungsmittel angeordnet ist, um die Kathode in Kontakt mit der Oberfläche des umgebenden Mediums zu positionieren.

11. Anordnung nach Anspruch 1, **dadurch gekennzeichnet, dass** jede Einheit einen Anodenstromabnehmer und einen Kathodenstromabnehmer umfasst, und die Anodenstromabnehmer und die Kathodenstromabnehmer in elektrischer Verbindung miteinander stehen.

12. Anordnung nach Anspruch 1, **dadurch gekennzeichnet, dass** die Kathoden der Einheiten mit einem gemeinsamen Kathodenstromabnehmer und die Anoden der Einheiten mit einem gemeinsamen Anodenstromabnehmer verbunden sind.

13. Anordnung nach Anspruch 1, **dadurch gekennzeichnet, dass** jede Einheit entweder einen Anodenstromabnehmer oder einen Kathodenstromabnehmer umfasst und entweder die Kathoden der Einheiten mit einem gemeinsamen Kathodenstromabnehmer verbunden sind oder die Anoden der Einheiten mit einem gemeinsamen Anodenstromabnehmer verbunden sind.

14. Verwendung einer Anordnung nach einem der Ansprüche 1 - 13 zum Behandeln des umgebenden Mediums, das ein Gewässer einschließlich natürlicher Gewässer, wie Flüsse, Seen, Teiche und Abwasser, ist.

15. Verwendung einer Anordnung nach einem der Ansprüche 1 - 13 zum Behandeln des umgebenden Mediums, das Abwasser ist, das aus häuslichem Abwasser, kommunalem oder landwirtschaftlichem Abwasser, Abwasser aus einem industriellen Prozess, ausgewählt aus Zellstoff und Papier, Öl und Gas, Bergbau, Nahrungsmitteln oder Getränken, pharmazeutischer Herstellung, Textilfertigung, chemischer Herstellung, Energieerzeugung, Waren- oder Elektronikherstellung, medizinischem Abfall ausgewählt ist.

## Revendications

1. Agencement de piles à combustible microbiennes comprenant au moins deux unités de pile à combustible microbienne (PCM), dans lequel chaque unité comprend
- au moins une cathode,
- au moins une anode, qui est disposée à une distance de la cathode, de préférence dans le sens de la gravité, l'anode étant en contact libre avec un milieu environnant, sous réserve que le nombre de cathodes ou d'anodes soit supérieur à un, la ou les anodes et la ou les cathodes étant connectées les unes aux autres par l'intermédiaire d'un circuit électrique externe,
- des moyens de positionnement pour positionner l'unité dans le milieu environnant,
dans lequel les unités de pile à combustible sont dépourvues de toute membrane située entre la ou les cathodes et la ou les anodes, et dans lequel chaque unité est physiquement connectée, de manière amovible, à au moins une autre unité.

2. Agencement selon la revendication 1, **caractérisé en ce que**, dans l'unité de pile à combustible microbienne, la au moins une cathode est plate et de type plaque, ayant une première grande surface horizontale qui peut être disposée en contact avec un catholyte, et une deuxième grande surface horizontale qui est disposée au moins partiellement en contact avec le milieu environnant.

3. Agencement selon la revendication 1 ou 2, **caractérisé en ce que** la au moins une anode est de type brosse, possède une structure en nid d'abeille ou est en forme de corps perforé creux.

4. Agencement selon la revendication 1, 2 ou 3, **caractérisé en ce que** la au moins une anode peut être une anode plate de type plaque, disposée parallèlement à la au moins une cathode.

5. Agencement selon l'une quelconque des revendications 1 à 4 précédentes, **caractérisé en ce que**, dans l'unité de pile à combustible microbienne, le nombre d'anodes est supérieur au nombre de cathodes, de préférence l'unité comprend une cathode et une pluralité d'anodes.

6. Agencement selon l'une quelconque des revendications 1 à 5 précédentes, **caractérisé en ce que** l'unité comprend une pluralité d'anodes qui sont disposées en connexion avec un collecteur de courant d'anode commun, ou chaque anode individuelle est disposée en connexion avec son propre collecteur de courant d'anode.

7. Agencement selon l'une quelconque des revendications 1 à 6 précédentes, **caractérisé en ce que** l'unité comprend au moins deux anodes qui sont en contact avec un collecteur de courant d'anode commun.

8. Agencement selon l'une quelconque des revendications 1 à 7 précédentes, **caractérisé en ce que** les moyens de positionnement comprennent au moins un support flottant tel qu'une bouée.

9. Agencement selon l'une quelconque des revendications 1 à 8 précédentes, **caractérisé en ce que** les moyens de positionnement comprennent des moyens de fixation et des supports fixes tels que des piquets.

10. Agencement selon l'une quelconque des revendications 1 à 9 précédentes, **caractérisé en ce que** les moyens de positionnement sont disposés de façon à positionner la cathode en contact avec la surface du milieu environnant.

11. Agencement selon la revendication 1, **caractérisé en ce que** chaque unité comprend un collecteur de courant d'anode et un collecteur de courant de cathode, et les collecteurs de courant d'anode et les collecteurs de courant de cathode sont électriquement connectés les uns aux autres.

12. Agencement selon la revendication 1, **caractérisé en ce que** les cathodes des unités sont connectées à un collecteur de courant de cathode commun et les anodes des unités sont connectées à un collecteur de courant d'anode commun.

13. Agencement selon la revendication 1, **caractérisé en ce que** chaque unité comprend soit un collecteur de courant d'anode soit un collecteur de courant de cathode, et soit les cathodes des unités sont connectées à un collecteur de courant de cathode commun soit les anodes des unités sont connectées à un collecteur de courant d'anode commun.

14. Utilisation d'un agencement selon l'une quelconque des revendications 1 à 13 pour traiter un milieu environnant qui est une masse d'eau comprenant des eaux naturelles telle que des rivières, des lacs, des bassins et des eaux usées.

15. Utilisation d'un agencement selon l'une quelconque des revendications 1 à 13 pour traiter un milieu environnant qui est des eaux usées choisies parmi des eaux usées domestiques ; des eaux usées municipales ou agricoles ; un effluent d'un procédé industriel choisi parmi un procédé de papeterie, un procédé de l'industrie pétrolière et gazière, un procédé minier, un procédé de l'industrie des produits alimentaires et des boissons, la fabrication de produits pharmaceutiques, la fabrication de produits textiles, la fabrication de produits chimiques, la production d'électricité, la fabrication de biens ou d'appareils électroniques, des déchets médicaux.
